# EUROPÄISCHE PATENTSCHRIFT

(11) **EP 1 647 441 B1**
(45) Veröffentlichungstag und Bekanntmachung des Hinweises auf die Patenterteilung: **26.01.2011**
(21) Anmeldenummer: 05020043.5
(22) Anmeldetag: 15.09.2005
(51) Int. Cl.: B60N 2/58

(54) **Sitz für ein Kraftfahrzeug**
Motor vehicle seat
Siège pour un véhicule automobile

(30) Priorität: 14.10.2004 DE 102004049929
(43) Veröffentlichungstag der Anmeldung: 19.04.2006
(73) Patentinhaber: Dr. Ing. h.c. F. Porsche AG, 70435 Stuttgart (DE)
(72) Erfinder: Beierl, Dominik, 70825 Korntal-Muenchingen (DE); Thoma, Jörg, 74722 Buchen (DE); Schindhelm, Axel, 71711 Murr an der Murr (DE)

(56) Entgegenhaltungen:
- WO-A-98/08703
- DE-A1- 4 313 813
- GB-A- 1 428 507
- JP-A- 2000 038 060

## Beschreibung

Die Erfindung bezieht sich auf einen Sitz für ein Kraftfahrzeug nach dem Oberbegriff des Anspruchs 1.

Aus der DE 299 10 294 U1 ist eine Befestigung für einen Sitzbezug an einem Sitzträger mittels eines Klemmelements bekannt, das aus einem sogenannten Tannenbaumprofil besteht, welches sich in einer Rinne des Sitzträgers klemmend verhakt und den Sitzbezug positioniert am Sitzträger festsetzt. Aus der GB 1 428 507 A ist ein Mittel zur Befestigung einer Abdeckung eines gepolsterten Teiles eines Stuhls oder der gleichen an einem festen Chassisteil bekannt, wobei die Mittel zur Befestigung aus einem mit einer Abdeckung versehenen Wulst besteht, der in eine Ausformung des Chassisteils eingreift. Dieses umfasst an einem freien Ende eine hakenförmige Schulter, welche in den Wulst eingreift, wobei der Wulst an der Vorderseite in einer Einformung des Chassisteils abgestützt ist. Eine Rastverbindung des Wulstes erfolgt somit über die Schulter sowie über die Einformung. Des Weiteren ist aus der WO 98/08703 A eine Rastverbindung für einen Sitzbezug über eine sogenannte Nut/Federverbindung vorgesehen. Ferner ist aus der JP 2000 038060 A eine Rastverbindung mit einem Widerhaken aufweisenden Element bekannt, in das ein Rundelement eingesetzt ist, welches mit einem Sitzbezug verbunden ist. Ferner ist aus der DE 43 13 813 A eine Rastverbindung eines Sitzbezuges mit Polsterstiften bekannt, die in Aufnahmeelementen mit Rastnasen einsetzbar sind.

Aufgabe der Erfindung ist es, eine verbesserte Befestigung für einen Sitzbezug an einem Fahrzeugsitz zu schaffen, die in einfacher Weise ein gespanntes Festsetzen am Sitzträger gewährleistet und darüber hinaus auch ein einfaches Entfernen des Sitzbezugs ermöglicht.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, dass der Sitzbezug um die Sitzkante herumgelegt, gespannt am Sitzträger befestigbar ist, wobei der Einhakvorgang von der Unterseite des Sitzes her mittels einer in ein offenes, eingeschlossenes Profil einsteckbare Leiste erfolgt, die sich über Rastelemente verhakt. Insbesondere ist das

Hohlprofil in den Sitzträger eingelassen und eingeschäumt angeordnet und im Querschnitt besteht es aus einem U-Profil und an mindestens einer Profilinnenwand ist die nach innen vorstehende Rastnase angeordnet, welche beispielsweise keilförmig ausgebildet ist. Durch diese Verrastung zwischen der Rastnase im Profil und dem Rastelement am Sitzbezug wird eine dauerhaft haltbare Spannbefestigung am Sitzträger erzielt, die zudem noch in einfacher Montageweise einsetzbar ist.

Damit eine stabile Verbindung zwischen dem Rastelement und dem Sitzbezug erzielbar ist, ist nach der Erfindung des Weiteren vorgesehen, dass mit dem freien Kantenende des Sitzbezugs eine plattenförmige Leiste verbunden ist, die endseitig das hakenförmige Rastelement aufweist, welches die Rastnase übergreift. Durch diese Leiste ist ein Einführen in das U-Profil gezielt möglich.

Zum Hintergreifen der Rastnase am Profil über das Rastelement und zur Abstützung am Hohlprofil ist nach der Erfindung ferner vorgesehen, dass gegenüberliegend der Rastnase eine freie Kante des Profils nach innen hin eine Abstellung aufweist und eine Abstützkante für die plattenförmige Leiste etwa im mittleren Bereich bildet. Hierdurch wird insbesondere auch erreicht, dass die plattenförmige Leiste mit dem Rastelement diagonal im U-Profil in einer Ebene X-X angeordnet ist und sich einerseits an der Abstellung und andererseits an der gegenüberliegenden Innenwandung an der Rastnase abgestützt gehalten ist.

Nach einer weiteren Ausführung der Erfindung kann das Hohlprofil innenseitig an seiner gegenüberliegenden Wandung jeweils eine Rastnase aufweisen und zu beiden Seiten der Leiste sind Rastelemente angeordnet, die eine Verrastung mit der zu diesen korrespondierenden Rastnasen bilden.

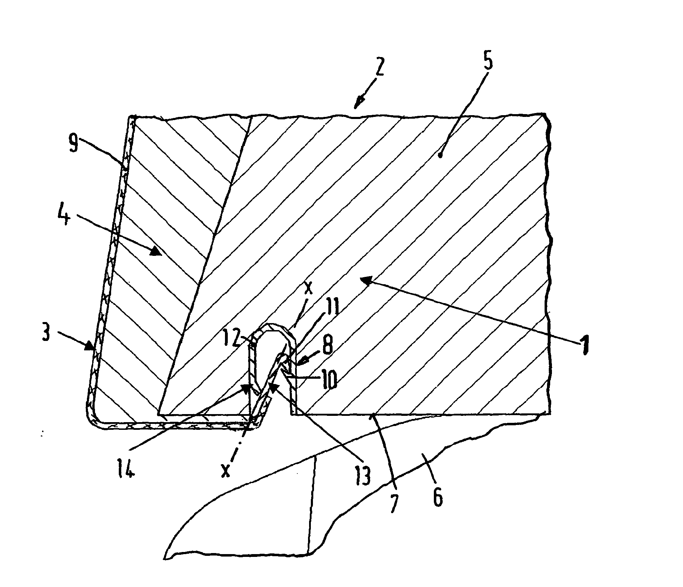

Ein Ausführungsbeispiel der Erfindung ist in der Zeichnung dargestellt, welche einen Sitz bzw. ein Sitzunterteil mit einer Befestigungsvorrichtung für einen Sitzbezug im Schnitt zeigt.

In der Zeichnung ist ein vorderer Teil eines Sitzelements 1 eines Fahrzeugsitzes 2 für ein Kraftfahrzeug dargestellt, wobei ein vorderer Bereich 3 des Sitzunterteils 1 aus einem Schaumelement 4 besteht, das sich über eine Sitzfläche, die nicht näher dargestellt ist, erstreckt. Das Schaumelement 4 umhüllt einen Sitzträger 5, der sich am Fahrzeugaufbau 6 abstützt, welcher nur angedeutet ist.

Im Sitzträger 5 ist an seiner Unterseite 7 eine Befestigungseinrichtung 8 für einen Sitzbezug 9 angeordnet. Diese Befestigungseinrichtung 8 umfasst eine Einhakverbindung zwischen einer Rastnase 10 am Sitzträger 5 und einem hakenförmigen Rastelement 11 am Sitzbezug 9.

Der Sitzträger 5 weist ein nach außen hin geöffnetes U-Profil 12 auf, das vorzugsweise in diesem Sitzträger 5 eingeschäumt oder sonst wie gehalten ist. An mindestens einer Innenwandung des Profils 12 ist die Rastnase 10 angeordnet. Diese ist korrespondierend mit dem Rastelement 11 vorgesehen, das vorzugsweise an einer plattenförmigen Leiste 13 angeformt ist, die fest mit dem Sitzbezug 9 verbunden wird.

Die Leiste 13 mit endseitigem Rastelement 11 stützt sich an einer ins Innere des Profils 12 ragenden Abstellung 14 ab, so dass die Leiste 13 eine diagonale Lage im Profil 12 einnimmt. Diese Abstellung 14 ist als Wiederlager ausgelegt, so dass keine wesentliche Abstützung am Sitzträger 5 selbst erfolgt.

Zum Festsetzen des Sitzbezugs 9 am Sitzunterteil 2 wird die sich über die gesamte Breite des Sitzunterteils 1 verlaufende Leiste 13 in das ebenfalls über die gesamte Breite des Sitzträgers 5 verlaufende Profil 12 eingeführt, derart, dass das Rastelement 11 die Rastnase 10 hintergreifen kann, wobei sich die Leiste 13 an der Abstellung 14 abstützt. Ein Lösen dieser Rastverbindung ist ebenfalls durch ein einfaches Hineinschieben der Leiste 13 in das Profil 12 möglich, indem sich dann die Rastverbindung wieder lösen kann.

## Patentansprüche

1. Sitz für ein Kraftfahrzeug mit einem von einem Sitzbezug (9) umhüllten Sitzunterteil (1), das einen Sitzträger (5) und ein diesen teilweise umgebendes Schaumelement (4) umfasst und der Sitzbezug (9) über Befestigungsmittel (8) mit dem Sitzträger (5) verbindbar ist und im Sitzträger (5) ein nach außen hin geöffnetes Profil (12) angeordnet ist, welches mindestens eine Rastnase (10) aufweist, die von mindestens einem mit dieser Rastnase (10) korrespondierenden Rastelement (11) des Sitzbezugs (9) übergriffen wird, **dadurch gekennzeichnet, dass** mit einem freien Kantenende des Sitzbezugs (9) eine plattenförmige Leiste (13) fest verbunden ist, die endseitig ein hakenförmiges Rastelement aufweist, das die Rastnase (10) übergreift und gegenüber liegend der Rastnase (10) an einer freien Kante des Profils (12) eine nach innen gerichtete Abstellung (14) vorgesehen ist, und diese eine Abstützkante für die plattenförmige Leiste (13) etwa im mittleren Bereich bildet und die plattenförmige Leiste (13) mit dem Rastelement (11) diagonal im Profil (12) in einer Ebene (x-x) angeordnet ist und sich einerseits an der Abstellung (14) und andererseits an der gegenüberliegenden Innenwandung an der Rastnase (10) abstützt.

2. Sitz nach Anspruch 1, **dadurch gekennzeichnet, dass** das Profil (12) in den Sitzträger (5) eingelassen und eingeschäumt angeordnet ist und im Querschnitt aus einem u-Profil besteht und an mindestens einer Profilinnenwandung, die nach innen vorstehende Rastnase (10) angeordnet ist.

3. Sitz nach den Ansprüchen 1 oder 2, **dadurch gekennzeichnet, dass** das Profil (12) innenseitig an seinen gegenüberliegenden Wandungen jeweils eine Rastnase (10) aufweist und zu beiden Seiten der Leiste (13) das Rastelement (11) angeordnet ist, welches eine Verrastung mit der zu diesen Rastelementen (11) korrespondierend angeordneten Rastnasen (10) bildet.

## Claims

1. Seat for a motor vehicle, with a seat lower part (1) which is covered by a seat cover (9) and comprises a seat support (5) and a foam element (4) partially surrounding the latter, and the seat cover (9) can be connected to the seat support (5) via fastening means (8), and an outwardly open profile (12) is arranged in the seat support (5), which profile has at least one latching lug (10) which is engaged over by at least one latching element (11) of the seat cover (9), the latching element corresponding to said latching lug (10), **characterized in that** a plate-like strip (13) is connected fixedly to a free edge end of the seat cover (9) and, on the end side, has a hook-shaped latching element which engages over the latching lug (10), and an inwardly directed bent portion (14) is provided on a free edge of the profile (12) facing the latching lug (10), and said bent portion forms a supporting edge for the plate-like strip (13) approximately in the central region, and the plate-like strip (13) is arranged diagonally with the latching element (11) in the profile (12) in a plane (x-x) and is supported on one side on the bent portion (14) and on the other side, on the opposite inner wall, on the latching lug (10).

2. Seat according to Claim 1, **characterized in that** the profile (12) is arranged embedded and foamed into the seat support (5) and consists of a U-profile in cross section, and the inwardly projecting latching lug (10) is arranged on at least one profile inner wall.

3. Seat according to Claim 1 or 2, **characterized in that** the profile (12) has a respective latching lug (10) on the inside, on the facing walls thereof, and the latching element (11) is arranged on both sides of the strip (13), said latching element forming a latching connection to the latching lugs (10) which are arranged in a manner corresponding to said latching elements (11).

## Revendications

1. Siège pour un véhicule automobile avec une partie inférieure de siège (1) enveloppée par une housse de siège (9), qui comprend un support de siège (5) et un élément en mousse (4) l'entourant en partie et la housse de siège (9) pouvant être reliée au support de siège (5) par le biais de moyens de fixation (8) et un profilé (12) ouvert en direction de l'extérieur étant disposé dans le support de siège (5) comportant au moins un bec d'encliquetage (10) engrené par au moins un élément d'encliquetage (11) de la housse de siège (9) correspondant à ce bec d'encliquetage (10), **caractérisé en ce qu'**une baguette (13) en forme de plaque est reliée fixement à une extrémité libre du bord de la housse de siège (9), ladite baguette comportant du côté d'extrémité un élément d'encliquetage en forme de crochet engrenant le bec d'encliquetage (10) et un arrêt (14) orienté vers l'intérieur reposant à l'opposée du bec d'encliquetage (10) étant prévu au niveau d'un bord libre du profilé (12), celui-ci formant un bord d'appui pour la baguette (13) en forme de plaque approximativement dans la zone centrale et **en ce que** la baguette (13) en forme de plaque est disposée avec l'élément d'encliquetage (11) en diagonale dans le profilé (12) dans un plan (x-x) et s'appuie d'un côté contre l'arrêt (14) et de l'autre côté contre la paroi intérieure opposée située au niveau du bec d'encliquetage (10).

2. Siège selon la revendication 1, **caractérisé en ce que** le profilé (12) est disposé de façon encastrée et recouverte de mousse dans le support de siège (5) et se compose en section transversale d'un profilé en U et **en ce que** le bec d'encliquetage (10) saillant vers l'intérieur est disposé contre au moins une paroi intérieure.

3. Siège selon les revendications 1 ou 2, **caractérisé en ce que** le profilé (12) comporte respectivement côté intérieur un bec d'encliquetage (10) au niveau de ses parois opposées et que l'élément d'encliquetage (11) est disposé des deux côtés de la baguette (13), ledit élément formant un encliquetage avec les becs d'encliquetage (10) disposés de façon correspondante par rapport à ces éléments d'encliquetage (11).
